# EUROPEAN PATENT SPECIFICATION

(11) **EP 4 138 031 B1**
(45) Date of publication and mention of the grant of the patent: **05.06.2024**
(21) Application number: 20931455.8
(22) Date of filing: 17.04.2020
(51) Int. Cl.: G06T 7/00, G06T 7/254, G06T 7/136, G06V 20/40

(54) **IMAGE PROCESSING METHOD**
BILDVERARBEITUNGSVERFAHREN
PROCÉDÉ DE TRAITEMENT D'IMAGE

(43) Date of publication of application: 22.02.2023
(73) Proprietor: NEC Corporation, 108-8001 Tokyo (JP)
(72) Inventor: SAWADA, Azusa, Tokyo 108-8001 (JP); SENZAKI, Kenta, Tokyo 108-8001 (JP); SHIBATA, Takashi, Tokyo 108-8001 (JP)
(74) Representative: Betten & Resch
(86) International application number: PCT/JP2020/016962
(87) International publication number: WO 2021/210181

(56) References cited:
- CN-A- 106 651 880
- CN-A- 107 563 985
- CN-A- 108 230 364
- JP-A- H09 288 732
- JP-A- 2003 302 898
- JP-A- 2004 227 527
- JP-A- 2013 120 412
- EUN JEON ET AL: "Human Detection Based on the Generation of a Background Image by Using a Far-Infrared Light Camera", SENSORS, vol. 15, no. 3, 19 March 2015 (2015-03-19) , pages 6763-6788, XP055558462, DOI: 10.3390/s150306763

## Description

### TECHNICAL FIELD

The present invention relates to an image processing method, an image processing system, and a program.

### BACKGROUND ART

Marine surveillance is performed by detecting sea-going vessels with use of captured image such as satellite images. In particular, by using synthetic aperture radar (SAR) images in which a ground surface is imaged from a high altitude as captured images, it is possible to perform marine surveillance not affected by the weather.

Patent Literature 1 discloses an example of detecting a vessel by using an SAR image. In the art disclosed in Patent Literature 1, a captured image is binarized and an area with high luminance is extracted as a candidate vessel.

Patent Literature 1: JP 2019-175142 A

### SUMMARY

However, in the art disclosed in Patent Literature 1, there is a problem that a vessel coming alongside a land cannot be detected with high accuracy due to an interference with an object provided on the land. That is, on a land that a vessel comes alongside, since there is an object on the land such as a bridge or a crane, a vessel cannot be detected with high accuracy due to an interference with such an object. Specifically, when an object on the land has high luminance, it is difficult to appropriately set a luminance value serving as a threshold for binarization, which causes a case where an object on the land and a vessel are not distinguishable from each other with high accuracy. Moreover, there is a case where an object on the land may be erroneously detected as a vessel. This causes a problem that detection may not be performed with high accuracy not only in the case of detecting a vessel and the case of the water area in a captured image, but also in the case of detecting a mobile body located in a specific area.

Eun Jeon et al: "Human Detection Based on the Generation of a Background Image by Using a Far-Infrared Light Camera" discloses human detection in an input thermal image based on generation of a background image, obtaining pixel and edge difference images from the background and input images, which are combined using pixel- wise conjunction. The thresholds for the difference images are adaptively determined based on the brightness information of the generated background image. Finally, human detection is performed in the combined difference image.

In view of the above, an object of the present invention is to provide an image processing method, an image processing system, and a program capable of solving the above-described problem, that is, a mobile body in a captured image cannot be detected with high accuracy.

An image processing method, according to one aspect of the present invention, is disclosed in claim 2.

Further, an image processing device, according to one aspect of the present invention, is disclosed in claim 1.

Further, a program, according to an aspect of the present invention, is disclosed in claim 3.

With the configurations described above, the present invention can detect a mobile body in a captured image with high accuracy.

### BRIEF DESCRIPTION OF DRAWINGS

Fig. 1 is a block diagram illustrating a configuration of an image processing device according to a first exemplary embodiment of the present invention.
Fig. 2 illustrates a state of image processing by the image processing device disclosed in Fig. 1.
Fig. 3 illustrates a state of image processing by the image processing device disclosed in Fig. 1.
Fig. 4 illustrates a state of image processing by the image processing device disclosed in Fig. 1.
Fig. 5 illustrates a state of image processing by the image processing device disclosed in Fig. 1.
Fig. 6 illustrates a state of image processing by the image processing device disclosed in Fig. 1.
Fig. 7 is a flowchart illustrating an operation of the image processing device disclosed in Fig. 1.
Fig. 8 is a block diagram illustrating a hardware configuration of an image processing device according to a second exemplary embodiment of the present invention.
Fig. 9 is a block diagram illustrating a configuration of the image processing device according to the second exemplary embodiment of the present invention.
Fig. 10 is a flowchart illustrating an operation of the image processing device according to the second exemplary embodiment of the present invention.

### EXEMPLARY EMBODIMENTS

### <First Exemplary Embodiment>

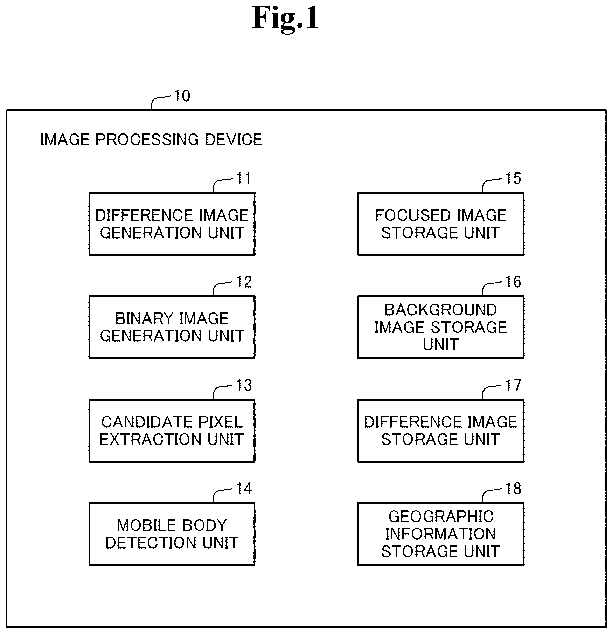

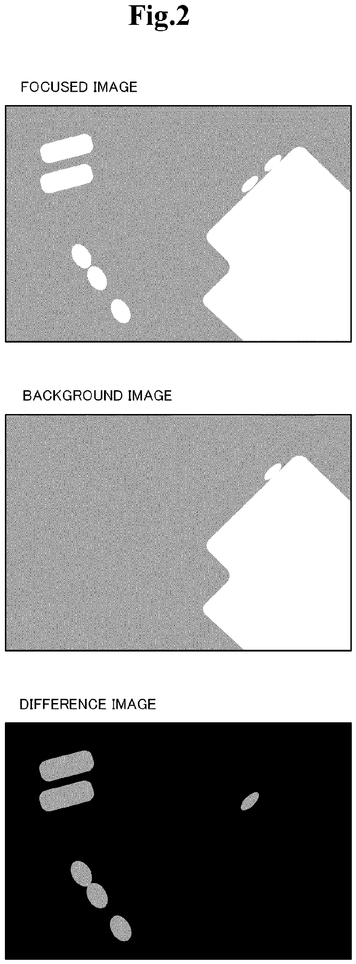

A first exemplary embodiment of the present invention will be described with reference to Figs. 1 to 7. Fig. 1 is a diagram for explaining a configuration of an image processing device, and Figs. 2 to 7 are diagrams for explaining the processing operation of the image processing device.

### [Configuration]

An image processing device 10 of the present embodiment is for detecting a sea-going vessel in order to perform marine surveillance from captured images such as satellite images captured using a synthetic aperture radar (SAR).

The image processing device 10 is configured of one or a plurality of information processing devices each having an arithmetic device and a storage device. As illustrated in Fig. 1, the image processing device 10 includes a difference image generation unit 11, a binary image generation unit 12, a candidate pixel extraction unit 13, and a mobile body detection unit 14. The respective functions of the difference image generation unit 11, the binary image generation unit 12, the candidate pixel extraction unit 13, and the mobile body detection unit 14 can be implemented through execution, by the arithmetic unit, of a program for implementing the respective functions stored in the storage device. The image processing device 10 also includes a focused image storage unit 15, a background image storage unit 16, a difference image storage unit 17, and a geographic information storage unit 18. The focused image storage unit 15, the background image storage unit 16, the difference image storage unit 17, and the geographic information storage unit 18 are configured of a storage device. Hereinafter, the respective constituent elements will be described in detail.

The focused image storage unit 15 stores therein a focused image (object image) that is an image of a sea that is an area (object area) from which a vessel that is a mobile body is detected. A focused image is a satellite image captured using an SAR as illustrated in the upper drawing of Fig. 2, and is mainly an image of the sea, but includes a land adjacent to the sea, or an object provided on the land. Regarding the luminance values of pixels in the focused image, pixels of a land, an object on the land, and a vessel take high luminance values, and pixels of a water area that is sea take low luminance values. Since a focused image is a satellite image, it is associated with position information such as latitude and longitude on the earth based on information such as an orbit of the satellite and the setting of the imaging device.

The background image storage unit 16 stores therein a background image that is a satellite image captured by using an SAR as similar to the focused image, and is an image of an area corresponding to the object area of the focused image, that is, the sea that is an area almost the same as the object area. In particular, a background image is a captured image at the time when there is no vessel moving in the object area such as the sea. Therefore, a background image is configured of an image captured in a time period when there is no vessel in the object area, or an image in which image processing of removing a mobile body, that is, a vessel, is performed on a plurality of past images of the object area. For example, a background image is generated by performing positioning of a plurality of past captured images of the object area and selecting a minimum value for each pixel to thereby remove pixels of high luminance values that may be determined to be a vessel, as described below. Since a background image is a satellite image itself or generated from a satellite image, it is associated with position information such as latitude and longitude on the earth based on information such as an orbit of the satellite and the setting of the imaging device.

The difference image storage unit 17 stores therein a difference image representing a difference between the focused image and the background image. Specifically, a difference image is an image in which a difference between luminance values of pixels corresponding to each other in the focused image and the background image is generated as a new pixel value, as described below. Therefore, as illustrated in the lower drawing of Fig. 2 for example, in the difference image, a portion of the focused image having a change in the luminance value relative to the background image takes a high luminance value, so that a portion where a mobile body is not present in the background image but is present in the focused image is particularly represented by a high luminance value relative to the surroundings. Since a difference image is generated from a focused image and a background image that are satellite images, it is associated with position information such as latitude and longitude on the earth based on information such as an orbit of the satellite and the setting of the imaging device.

The geographic information storage unit 18 stores therein map information of an object area where the focused image and the background image are captured. In particular, map information includes position information of a land of the object area, and includes position information such as latitude and longitude on the earth of the land, for example.

The difference image generation unit 11 (image generation means) reads out, from the focused image storage unit 15, a focused image captured at a predetermined time that is a processing object from which a vessel is to be detected, reads out a background image from the background image storage unit 16, generates a difference image from the focused image and the background image, and stores it in the difference image storage unit 17. For example, the difference image generation unit 11 performs positioning of the focused image illustrated in the upper drawing of Fig. 2 and the background image illustrated in the center drawing of Fig. 2, on the basis of the position information, the similarity in the topography in the images, and the like, and calculates a difference between the luminance values of pixels corresponding to each other. Then, the difference image generation unit 11 generates a difference image as illustrated in the lower drawing of Fig. 2 by using the difference as a new pixel value. Therefore, the generated difference image is an image in which a portion in the focused image where the luminance value has a change relative to the background image, that is, a portion of a mobile body in particular, is indicated by a higher luminance value relative to the surroundings. However, the difference image may be generated by a method other than that described above. For example, in the case of using a combination of a focused image and a background image that are not captured on the same orbit by the satellite, it is possible to generate a difference image by applying a technique enabling extraction of a change excluding a distortion difference on an image for each orbit and performing positioning of the focused image and the background image.

Note that the difference image generation unit 11 may have a function of generating a background image to be used for generating a difference image. In that case, the difference image generation unit 11 generates a background image by acquiring past captured images of the object area previously stored in the background image storage unit 16, performing positioning on those captured images on the basis of the position information, similarity of the topography in the images, and the like, and selecting a minimum value for each pixel to thereby remove pixels having high luminance values that may be determined as a vessel. However, a background image may be generated by any method.

The binary image generation unit 12 (detection means) performs processing to binarize each of the focused image, the background image, and the difference image. At that time, the binary image generation unit 12 determines a threshold of a luminance value for binarization in each image. In the below description, a threshold setting process by the binary image generation unit 12 will be described first.

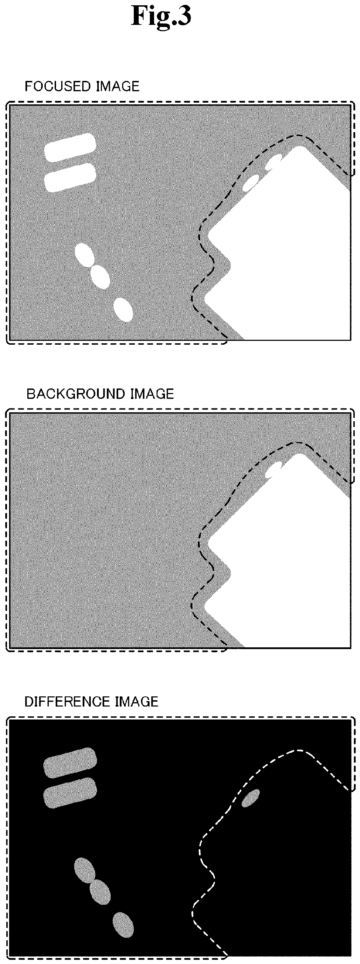

The binary image generation unit 12 first uses the geographic information stored in the geographic information storage unit 18 to set a water area (specific area) on the focused image. Specifically, the binary image generation unit 12 specifies a land area (exclusion area) representing the position of the land on the focused image, from the position information included in the focused image and the geographic information including the position information of the land. Then, the binary image generation unit 12 sets an extended land area (extended exclusion area) that is obtained by extending the edge of the land adjacent to the water area in the land area by a predetermined distance to the water area side. For example, the binary image generation unit 12 sets the extended land area by extending the edge of the land area adjacent to the water area to the water area side by 20 pixels in the focused image, that is, by 20 m in the object area. Then, the binary image generation unit 12 excludes the extended land area from the object area of the entire focused image and sets the remaining area as a water area. Thereby, the binary image generation unit 12 sets the water area on the focused image as indicated by an area surrounded by a dotted line in the upper drawing of Fig. 3.

As similar to the above description, the binary image generation unit 12 sets a water area on the background image as illustrated by an area surrounded by a dotted line in the center drawing of Fig. 3, and sets a water area in the difference image as illustrated by an area surrounded by a dotted line in the lower drawing of Fig. 3. In this manner, even if an object on the land is not completely included in the land area according to the accuracy of the land area (exclusion area) described above, a water area of a predetermined area located adjacent to the land is excluded as an extended land area. Therefore, it is possible to set a water area in which a bridge installed on a land or an object on the land such as a crane are excluded. However, the binary image generation unit 12 is not necessarily limited to set a water area by setting an extended land area as described above. The binary image generation unit 12 may set a water area by simply excluding the land area from the object area, or may set a water area by means of another method.

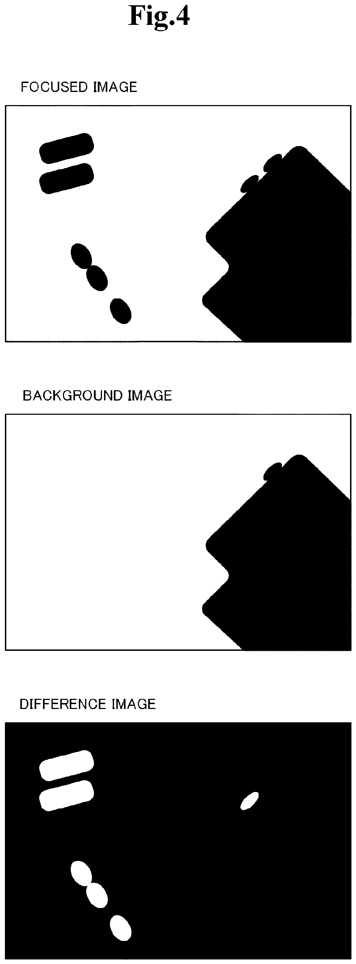

Then, the binary image generation unit 12 generates distribution of luminance values of pixels of a water area set in each of the focused image, the background image, and the difference image, and from the distribution, sets a threshold of luminance values for binarization. Specifically, for a focused image, the binary image generation unit 12 first generates distribution of luminance values of all pixels in the area set as a water area to be surrounded by a dotted line in the upper drawing of Fig. 3. At that time, for example, the binary image generation unit 12 generates distribution of the luminance values of the pixels by approximating the distribution of the luminance values to a function. Then, from the generated distribution, the binary image generation unit 12 sets a threshold of luminance values for binarizing the focused image. In particular, the binary image generation unit 12 sets a threshold of luminance values with which luminance values of the sea that can be considered as a water area and luminance values that can be considered as an object existing in the water area are distinguishable from each other, in the water area in the focused image. Then, the binary image generation unit 12 uses the threshold set for the focused image to generate a binary image (transformed image) in which the luminance value of each pixel in the entire focused image is binarized. Thereby, the binary image generation unit 12 generates a binary image as illustrated in the upper drawing of Fig. 4 from the focused image.

Then, the binary image generation unit 12 also performs, on the background image and the difference image, the same processing as that performed on the focused image, and generates binary images respectively. Specifically, for the background image, the binary image generation unit 12 generates distribution of luminance values of all pixels in the area set as a water area surrounded by a dotted line in the center drawing of Fig. 3, and from the distribution, sets a threshold of the luminance values for binarizing the background image, and generates a binary image as illustrated in the center drawing of Fig. 4 from the background image by using such a threshold. At that time, the binary image generation unit 12 sets a threshold of luminance values with which the luminance values of the sea that can be considered as a water area and the luminance values that can be considered as an object existing in the water area are distinguishable from each other, in the water area in the background image. Furthermore, for the difference image, the binary image generation unit 12 generates distribution of luminance values of all pixels in the area set as a water area surrounded by a dotted line in the lower drawing of Fig. 3, and from the distribution, sets a threshold of the luminance values for binarizing the difference image, and generates a binary image as illustrated in the lower drawing of Fig. 4 from the difference image by using such a threshold. At that time, the binary image generation unit 12 sets a threshold of luminance values with which the luminance values of the sea that can be considered as a water area and the luminance values that can be considered as an object existing in the water area are distinguishable from each other, in the water area in the difference image. Thereby, the binary image of the difference image becomes a binary image in which a pixel having a change in the luminance value and a pixel having no change in the luminance value between the focused image and the background image, that is, a pixel that can be considered as a water area and a pixel that can be considered as an object existing in the water area, are distinguishable from each other.

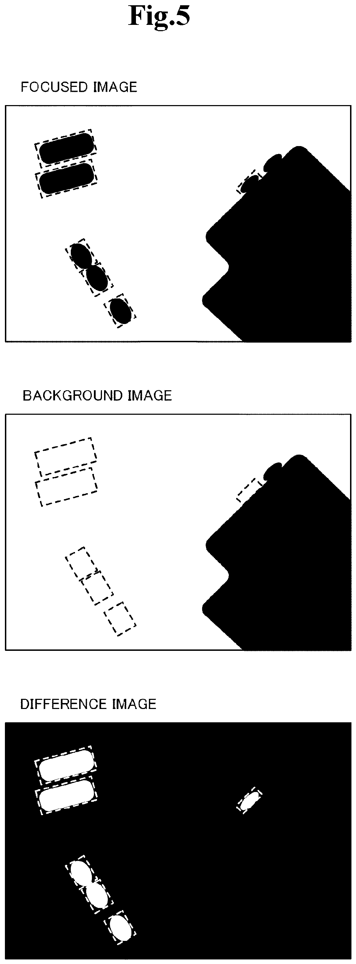

The candidate pixel extraction unit 13 (detection means) extracts a pixel of a candidate vessel by using the binary images of the focused image, the background image, and the difference image generated as described above. At that time, the candidate pixel extraction unit 13 determines, for each binary image, whether or not each pixel is a water area (specific area), and extracts a pixel that is a candidate vessel on the basis of the determination result of each binary image. For example, when the focused pixel satisfies that there is a change in the pixel values, that is, that pixel is not a water area in the binary image of the focused image, it is a water area in the binary image of the background image, and it is not a water area in the binary image of the difference image, the candidate pixel extraction unit 13 extracts it as a pixel of a candidate vessel. As a result, the pixels of the areas surrounded by the rectangles of the dotted lines in Fig. 5 are extracted as candidate vessels.

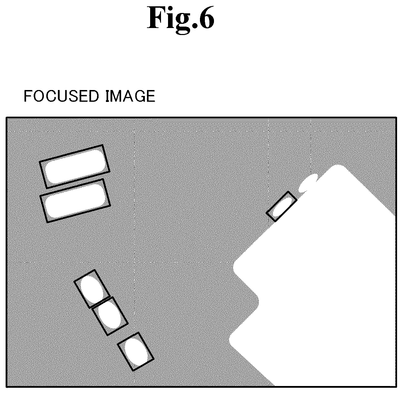

The mobile body detection unit 14 (detection means) detects a mobile body that is a vessel located on the focused image, on the basis of the pixels extracted as a candidate vessel as described above. For example, the mobile body detection unit 14 generates a figure configured of a plurality of pixels on the basis of the distance between the pixels extracted as a candidate vessel. For example, when the pixels extracted as a candidate vessel are adjacent to each other or located within a range of a certain distance, the mobile body detection unit 14 puts a set of the pixels into one figure. Then, the mobile body detection unit 14 compares, for example, the generated figure with a template indicating the shape of a vessel prepared in advance, and when determining that the generated figure is almost the same as the template, detects the generated figure as a vessel. Then, as illustrated in Fig. 6, the mobile body detection unit 14 detects that a while figure surrounded by a rectangle of a solid line as a vessel in the focused image. Note that a plurality of determination criteria may be set for a set of pixels to be generated as one figure, depending on the vessel size.

### [Operation]

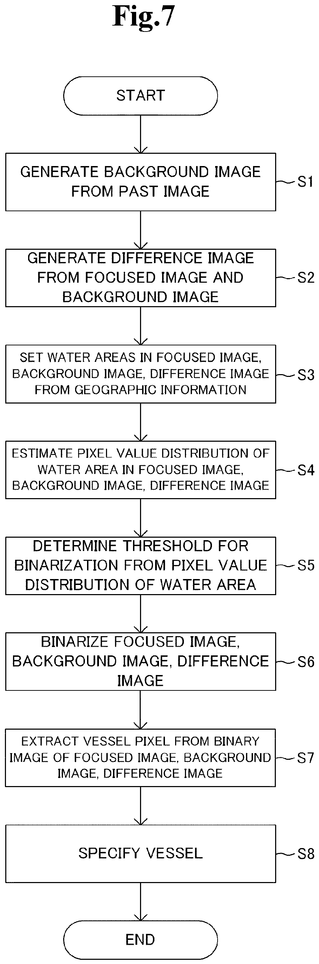

Next, operation of the image processing device 10 as described above will be described with mainly reference to the flowchart of Fig. 7. First, in the image processing device 10, a plurality of past images of an object area captured in advance are stored in the background image storage unit 16, and a focused image in which an object area for detecting a vessel is captured is stored in the focused image storage unit 15. Moreover, in the image processing device 10, geographic information including position information of a land in the object area is stored in the geographic information storage unit 18.

First, the image processing device 10 acquires a plurality of past captured images of an object area previously stored in the background image storage unit 16. Then, the image processing device 10 performs positioning on the captured images on the basis of the position information, selects a minimum value for each pixel to remove pixels having high luminance values that may be determined as a vessel to thereby generate a background image, and stores it in the background image storage unit 16 (step S1). For example, the image processing device 10 generates a background image as illustrated in the center drawing of Fig. 2. Note that the process of generating a background image may not be performed, and may previously store an image determined that a mobile body such as a vessel is not present, as a background image.

Then, the image processing device 10 reads out, from the focused image storage unit 15, a focused image as illustrated in the upper drawing of Fig. 2 that is captured at a predetermined time and is an object of processing to detect a vessel, and also reads out a background image as illustrated in the center drawing of Fig. 2 from the background image storage unit 16. Then, the image processing device 10 calculates a difference between the luminance values of the pixels corresponding to each other from the focused image and the background image, generates a difference image by using the difference as a new pixel value, and stores it in the difference image storage unit 17 (step S2). For example, the image processing device 10 generates a difference image as illustrated in the lower drawing of Fig. 2.

Then, the image processing device 10 sets a water area in each of the focused image, the background image, and the difference image (step S3). For example, regarding the focused image, the image processing device 10 specifies a land area representing the position of the land on the focused image by using the geographic information stored in the geographic information storage unit 18, and sets an extended land area by extending the edge adjacent to the water area of the land area by a predetermined distance to the water area side. Then, the image processing device 10 excludes the extended land area from the object area of the entire focused image, and sets the remaining area as a water area. Thereby, the image processing device 10 sets the water area on the focused image as indicated by an area surrounded by the dotted line in the upper drawing of Fig. 3 for example. Similarly, the image processing device 10 sets water areas on the background image and the difference image as indicated by the dotted line in the center drawing of Fig. 3 and the dotted line in the lower drawing of Fig. 3, respectively.

Then, the image processing device 10 generates distribution of the luminance values of the pixels in the water area for each water area set in the focused image, the background image, and the difference image (step S4). For example, the image processing device 10 generates distribution of the luminance values of the pixels by approximating the distribution of the luminance values to a function. Then, from the distribution generated for each of the focused image, the background image, and the difference image, the image processing device 10 sets a threshold of a luminance value for binarizing each image (step S5). For example, for each of the focused image, the background image, and the difference image, the image processing device 10 sets a threshold of luminance values with which the luminance values of the sea that can be considered as a water area and the luminance values that can be considered as an object existing in the water area are distinguishable from each other. Regarding the difference image, it can be said to set a threshold of luminance values with which the pixels having no change and the pixels with a change between the focused image and the background image are distinguishable from each other.

Then, for each of the focused image, the background image, and the difference image, the image processing device 10 generates a binary image in which the luminance value of each pixel is binarized by using a threshold set for each image (step S6). As a result, the image processing device 10 generates binary images as illustrated in the upper drawing, the center drawing, and the lower drawing of Fig. 4 from the focused image, the background image, and the difference image, respectively.

Then, the image processing device 10 extracts a pixel that is a candidate vessel by using the binary images of the focused image, the background image, and the difference image generated as described above (step S7). For example, the image processing device 10 determines, for each binary image, whether or not each pixel is a water area, and extracts a pixel that is a candidate vessel on the basis of the determination result of each binary image. In particular, in the present embodiment, when the focused pixel satisfies that there is a change in the pixel values, that is, the pixel is not a water area in the binary image of the focused image, it is a water area in the binary image of the background image, and it is not a water area in the binary image of the difference image, the image processing device 10 extracts it as a pixel of a candidate vessel. As a result, the pixels in the areas surrounded by the rectangles of dotted lines in Fig. 5 are extracted as candidate vessels.

Then, the image processing device 10 detects a mobile body that is a vessel located on the focused image, on the basis of the pixels extracted as a candidate vessel as described above (step S8). For example, the image processing device 10 generates a figure configured of a plurality of pixels on the basis of a distance between the pixels extracted as a candidate vessel, and when the figure satisfies the criterion such as a template, the image processing device 10 detects it as a vessel. For example, as illustrated in Fig. 6, the image processing device 10 detects that a while figure surrounded by a rectangle of a solid line as a vessel in the focused image.

As described above, in the present embodiment, by using an object image from which a mobile body that is a vessel is to be detected, a background image, and a difference image thereof, it is possible to suppress an influence of a land and an object on the land and to detect a vessel with high accuracy. In particular, in the present embodiment, a vessel can be detected with high accuracy by using binary images of an object image, a background image, and a difference image, performing binarization by using distribution of luminance values of a water area set to each of the object image, the background image, and the difference image, and setting a water area in which an expended land is removed at that time.

In the above description, an example in which the image processing device 10 detects a vessel appearing in the focused image has been provided. However, it is possible to detect various vessels by changing the criteria for extracting a pixel as a candidate vessel in the candidate pixel extraction unit 13. For example, by changing the criterion for extracting a candidate vessel in the candidate pixel extraction unit 13, it is possible to detect a vessel lost in the background image, that is, a vessel that is at anchor in the background image but is lost in the focused image. In that case, when the focused pixel satisfies that there is a change in the pixel value, that is, the pixel is a water area in the binary image of the focused image, it is not a water area in the binary image of the background image, and it is not a water area in the binary image of the difference image, the candidate pixel extraction unit 13 extracts it as a pixel of a candidate for a lost vessel.

### <Second Exemplary Embodiment>

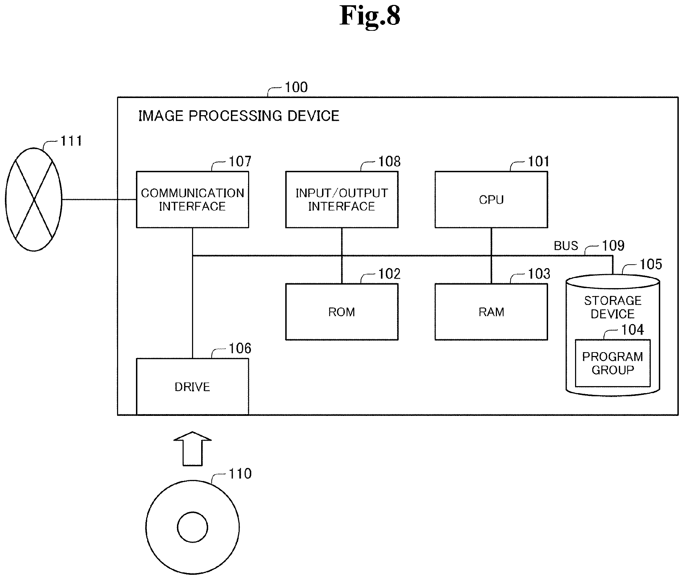

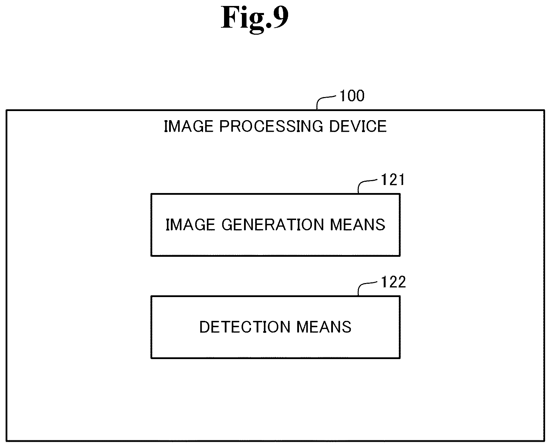

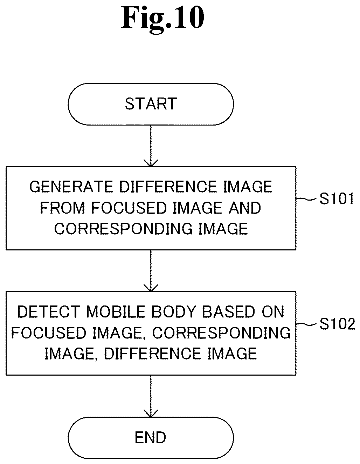

Next, a second exemplary embodiment of the present invention will be described with reference to Figs. 8 to 10. Figs. 8 and 9 are block diagrams illustrating a configuration of an image processing device according to the second exemplary embodiment, and Fig. 10 is a flowchart illustrating an operation of the image processing device. Note that the present embodiment shows the outlines of the configurations of the image processing device and the image processing method described in the embodiment described above.

First, a hardware configuration of an image processing device 100 in the present embodiment will be described with reference to Fig. 8. The image processing device 100 is configured of a typical information processing device, having a hardware configuration as described below as an example.
- Central Processing Unit (CPU) 101 (arithmetic unit)
- Read Only Memory (ROM) 102 (storage device)
- Random Access Memory (RAM) 103 (storage device)
- Program group 104 to be loaded to the RAM 103
- Storage device 105 storing therein the program group 104
- Drive 106 that performs reading and writing on a storage medium 110 outside the information processing device
- Communication interface 107 connecting to a communication network 111 outside the information processing device
- Input/output interface 108 for performing input/output of data
- Bus 109 connecting the respective constituent elements

The image processing device 100 can construct, and can be equipped with, an image generation means 121 and a detection means 122 illustrated in Fig. 9 through acquisition and execution of the program group 104 by the CPU 101. Note that the program group 104 is stored in the storage device 105 or the ROM 102 in advance, and is loaded to the RAM 103 and executed by the CPU 101 as needed. Further, the program group 104 may be provided to the CPU 101 via the communication network 111, or may be stored on the storage medium 110 in advance and read out by the drive 106 and supplied to the CPU 101. However, the image generation means 121 and the detection means 122 may be constructed by dedicated electronic circuits for implementing such means.

Note that Fig. 8 illustrates an example of the hardware configuration of the information processing device that is the image processing device 100. The hardware configuration of the information processing device is not limited to that described above. For example, the information processing device may be configured of part of the configuration described above, such as without the drive 106.

The image processing device 100 executes the image processing method illustrated in the flowchart of Fig. 10, by the functions of the image generation means 121 and the detection means 122 constructed by the program as described above.

As illustrated in Fig. 10, the image processing device 100 executes the processing to
generate a difference image that represents a difference between an object image that is an image of an area from which a mobile body is to be detected and a corresponding image that is another image of an area corresponding to the area of the object image (step S101), and
detect the mobile body from the object image on the basis of the object image, the corresponding image, and the difference image (step S102).

Since the present invention is configured as described above, by using an object image from which a mobile body is to be detected, a background image, and a difference image thereof, it is possible to detect a mobile body with high accuracy while suppressing an influence of an area that is different from the place to which the mobile body can move or an object existing in such an area.

Note that the program described above can be supplied to a computer by being stored in a non-transitory computer-readable medium of any type. Non-transitory computer-readable media include tangible storage media of various types. Examples of non-transitory computer-readable media include magnetic storage media (for example, flexible disk, magnetic tape, and hard disk drive), magneto-optical storage media (for example, magneto-optical disk), a CD-ROM (Read Only Memory), a CD-R, a CD-R/W, and semiconductor memories (for example, mask ROM, PROM (Programmable ROM), EPROM (Erasable PROM), a flash ROM, and a RAM (Random Access Memory)). Note that the program may be supplied to a computer by being stored in a transitory computer-readable medium of any type. Examples of transitory computer-readable media include electric signals, optical signals, and electromagnetic waves. A transitory computer-readable medium can be supplied to a computer via a wired communication channel such as a wire and an optical fiber, or a wireless communication channel.

The invention is defined by the appended claims.

The form and details of the present invention can be changed within the scope of the present invention in various manners that can be understood by those skilled in the art. Further, at least one of the functions of the image generation means 121 and the detection means 122 described above may be carried out by an information processing device provided and connected to any location on the network, that is, may be carried out by so-called cloud computing.

### REFERENCE SIGNS LIST

- 10: image processing device
- 11: difference image generation unit
- 12: binary image generation unit
- 13: candidate pixel extraction unit
- 14: mobile body detection unit
- 15: focused image storage unit
- 16: background image storage unit
- 17: difference image storage unit
- 18: geographic information storage unit
- 100: image processing device
- 101: CPU
- 102: ROM
- 103: RAM
- 104: program group
- 105: storage device
- 106: drive
- 107: communication interface
- 108: input/output interface
- 109: bus
- 110: storage medium
- 111: communication network
- 121: image generation means
- 122: detection means

## Claims

1. An image processing device comprising:
image generation means (11) for generating a difference image representing a difference between an object image and a background image, the object image being an image including a target area from which a mobile body is to be detected, the background image including the target area and being a captured image at the time when there is no mobile body in the target area; and
detection means for detecting the mobile body from the object image on the basis of the object image, the background image, and the difference image,
wherein the object image and the background image are satellite images each associated with position information being the latitude and longitude on the earth, based on an orbit of a satellite,
wherein the image generation means (11) is configured to perform positioning of the object image and the background image on the basis of the position information and a topological similarity between the object image and the background image, calculate a difference between a luminance value of each pixel of the object image and a luminance value of a corresponding pixel of the background image, and generate the difference image using the calculated differences as pixel values, and
wherein the detection means comprises:
binary image generation means (12) configured to
specify, on the basis of position information included in each of the object image, the background image and the difference image, and geographic information including position information of a land, an exclusion area that is a land area representing position of the land on each of the object image, the background image, and the difference image,
set an extended exclusion area that is generated, by extending the specified exclusion area according to a predetermined criterion, from the target area included in each of the object image, the background image, and the difference image,
determine a residual area in which the extended exclusion area is removed from the target area included in each of the object image, the background image, and the difference image, to be a water area,
generate a distribution of luminance values of pixels in the water area included in each of the object image, the background image, and the difference image,
set a threshold of luminance values with which luminance values that can be considered as a water area and luminance values that can be considered as an object existing in the water area are distinguishable from each other, in the water area in each of the object image, the background image, and the difference image, and
generate binary images obtained by binarizing the object image, the background image, and the difference image respectively with use of the set thresholds;
candidate pixel extraction unit (13) configured to
detect, on the basis of the binary images of the object image, the background image, and the difference image, pixels each satisfying that the pixel is not a water area in the binary image of the object image, the pixel is a water area in the binary image of the background image, and the pixel is not a water area in the binary image of the difference image, and
extract the detected pixels as pixels of a mobile body candidate; and
mobile body detection means (14) configured to detect the mobile body in the object image on the basis of the extracted pixels.

2. A computer- implemented image processing method comprising:
(S2) generating a difference image representing a difference between an object image and a background image, the object image being an image including a target area from which a mobile body is to be detected, the background image including the target area and being a captured image at the time when there is no mobile body in the target area; and
detecting the mobile body from the object image on the basis of the object image, the background image, and the difference image,
wherein the object image and the background image are satellite images each associated with position information being the latitude and longitude on the earth,
wherein the generating comprises:
performing positioning of the object image and the background image on the basis of the position information or a topological similarity between the object image and the background image,
calculating a difference between a luminance value of each pixel of the object image and a luminance value of a corresponding pixel of the background image, and
generating the difference image using the calculated differences as pixel values, and
wherein the detecting comprises:
(S3) specifying, on the basis of position information included in each of the object image, the background image and the difference image, and geographic information including position information of a land, an exclusion area that is a land area representing position of the land on each of the object image, the background image, and the difference image,
(S3) setting an extended exclusion area that is generated, by extending the specified exclusion area according to a predetermined criterion, from the target area included in each of the object image, the background image, and the difference image,
(S3) determining a residual area in which the extended exclusion area is removed from the target area included in each of the object image, the background image, and the difference image, to be a water area,
(S4) generating a distribution of luminance values of pixels in the water area included in each of the object image, the background image, and the difference image,
(S5) setting a threshold of luminance values with which luminance values that can be considered as a water area and luminance values that can be considered as an object existing in the water area are distinguishable from each other, in the water area in each of the object image, the background image, and the difference image,
(S6) generating binary images obtained by binarizing the object image, the background image, and the difference image respectively with use of the set thresholds,
(S7) detecting, on the basis of the binary images of the object image, the background image, and the difference image, pixels each satisfying that the pixel is not a water area in the binary image of the object image, the pixel is a water area in the binary image of the background image, and the pixel is not a water area in the binary image of the difference image,
(S7) extracting the detected pixels as pixels of a mobile body candidate; and
(S8) detecting the mobile body in the object image on the basis of the extracted pixels.

3. A program for causing a computer to perform the method according to claim 2.

## Patentansprüche

1. Bildverarbeitungsvorrichtung, umfassend:
eine Bilderzeugungseinrichtung (11) zum Erzeugen eines Differenzbildes, das eine Differenz zwischen einem Objektbild und einem Hintergrundbild darstellt, wobei das Objektbild ein Bild ist, das einen Zielbereich enthält, aus welchem ein mobiler Körper zu detektieren ist, wobei das Hintergrundbild den Zielbereich enthält und ein zu der Zeit erfasstes Bild ist, zu welcher es keinen mobilen Körper im Zielbereich gibt; und
eine Detektionseinrichtung zum Detektieren des mobilen Körpers aus dem Objektbild auf der Basis des Objektbildes, des Hintergrundbildes und des Differenzbildes,
wobei das Objektbild und das Hintergrundbild Satellitenbilder sind, die jeweils mit Positionsinformation assoziiert sind, die basierend auf einer Umlaufbahn eines Satelliten der Breitengrad und der Längengrad auf der Erde ist,
wobei die Bilderzeugungseinrichtung (11) konfiguriert ist, um ein Positionieren des Objektbildes und des Hintergrundbildes auf der Basis der Positionsinformation und einer topologischen Ähnlichkeit zwischen dem Objektbild und dem Hintergrundbild durchzuführen, eine Differenz zwischen einem Luminanzwert jedes Pixels des Objektbildes und einem Luminanzwert eines entsprechenden Pixels des Hintergrundbildes zu berechnen und das Differenzbild unter Verwendung der berechneten Differenzen als Pixelwerte zu erzeugen, und
wobei die Detektionseinrichtung folgendes umfasst:
eine Binärbilderzeugungseinrichtung (12), die konfiguriert ist, um
auf der Basis von in jedem des Objektbildes, des Hintergrundbildes und des Differenzbildes enthaltener Positionsinformation und geografischer Information, die Positionsinformation von einem Land enthält, einen Sperrbereich zu spezifizieren, der ein Landbereich ist, der eine Position des Landes auf jedem des Objektbildes, des Hintergrundbildes und des Differenzbildes darstellt,
einen erweiterten Sperrbereich einzustellen, der durch Erweitern des spezifizierten Sperrbereichs gemäß einem vorbestimmten Kriterium aus dem in jedem des Objektbildes, des Hintergrundbildes und des Differenzbildes enthaltenen Zielbereich erzeugt ist,
einen restlichen Bereich, in welchem der erweiterte Sperrbereich aus dem in jedem des Objektbildes, des Hintergrundbildes und des Differenzbildes enthaltenen Zielbereich entfernt ist, derart zu bestimmen, dass er ein Wasserbereich ist,
eine Verteilung von Luminanzwerten von Pixeln in dem in jedem des Objektbildes, des Hintergrundbildes und des Differenzbildes enthaltenen Wasserbereich zu erzeugen,
eine Schwelle von Luminanzwerten, mit welcher Luminanzwerte, die als Wasserbereich angesehen werden können, und Luminanzwerte, die als im Wasserbereich existierendes Objekt angesehen werden können, voneinander unterscheidbar sind, im Wasserbereich in jedem des Objektbildes, des Hintergrundbildes und des Differenzbildes einzustellen, und
durch Binarisieren des Objektbildes, des Hintergrundbildes und des Differenzbildes jeweils mit einem Verwenden der eingestellten Schwellen erhaltene Binärbilder zu erzeugen;
eine Kandidatenpixel-Extraktionseinheit (13), die konfiguriert ist, um
auf der Basis der Binärbilder des Objektbildes, des Hintergrundbildes und des Differenzbildes Pixel zu detektieren, die jeweils erfüllen, dass das Pixel nicht ein Wasserbereich im Binärbild des Objektbildes ist, das Pixel ein Wasserbereich im Binärbild des Hintergrundbildes ist und das Pixel nicht ein Wasserbereich im Binärbild des Differenzbildes ist, und
die detektierten Pixel als Pixel eines Kandidaten eines mobilen Körpers zu extrahieren; und
eine Detektionseinrichtung für einen mobilen Körper (14), die konfiguriert ist, um den mobilen Körper im Objektbild auf der Basis der extrahierten Pixel zu detektieren.

2. Computerimplementiertes Bildverarbeitungsverfahren, umfassend:
(S2) Erzeugen eines Differenzbildes, das eine Differenz zwischen einem Objektbild und einem Hintergrundbild darstellt, wobei das Objektbild ein Bild ist, das einen Zielbereich enthält, aus welchem ein mobiler Körper zu detektieren ist, wobei das Hintergrundbild den Zielbereich enthält und ein zu der Zeit erfasstes Bild ist, zu welcher es keinen mobilen Körper im Zielbereich gibt; und
Detektieren des mobilen Körpers aus dem Objektbild auf der Basis des Objektbildes, des Hintergrundbildes und des Differenzbildes,
wobei das Objektbild und das Hintergrundbild Satellitenbilder sind, die jeweils mit Positionsinformation assoziiert sind, die der Breitengrad und der Längengrad auf der Erde ist,
wobei das Erzeugen folgendes umfasst:
Durchführen eines Positionierens des Objektbildes und des Hintergrundbildes auf der Basis der Positionsinformation oder einer topologischen Ähnlichkeit zwischen dem Objektbild und dem Hintergrundbild,
Berechnen einer Differenz zwischen einem Luminanzwert jedes Pixels des Objektbildes und einem Luminanzwert eines entsprechenden Pixels des Hintergrundbildes, und
Erzeugen des Differenzbildes unter Verwendung der berechneten Differenzen als Pixelwerte, und
wobei das Detektieren folgendes umfasst:
(S3) auf der Basis von in jedem des Objektbildes, des Hintergrundbildes und des Differenzbildes enthaltener Positionsinformation und geografischer Information, die Positionsinformation von einem Land enthält, Spezifizieren eines Sperrbereichs, der ein Landbereich ist, der eine Position des Landes auf jedem des Objektbildes, des Hintergrundbildes und des Differenzbildes darstellt,
(S3) Einstellen eines erweiterten Sperrbereichs, der durch Erweitern des spezifizierten Sperrbereichs gemäß einem vorbestimmten Kriterium aus dem in jedem des Objektbildes, des Hintergrundbildes und des Differenzbildes enthaltenen Zielbereich erzeugt ist,
(S3) derartiges Bestimmen eines restlichen Bereichs, in welchem der erweiterte Sperrbereich aus dem in jedem des Objektbildes, des Hintergrundbildes und des Differenzbildes enthaltenen Zielbereich entfernt ist, dass er ein Wasserbereich ist,
(S4) Erzeugen einer Verteilung von Luminanzwerten von Pixeln in dem in jedem des Objektbildes, des Hintergrundbildes und des Differenzbildes enthaltenen Wasserbereich,
(S5) Einstellen einer Schwelle von Luminanzwerten, mit welcher Luminanzwerte, die als Wasserbereich angesehen werden können, und Luminanzwerte, die als im Wasserbereich existierendes Objekt angesehen werden können, voneinander unterscheidbar sind, im Wasserbereich in jedem des Objektbildes, des Hintergrundbildes und des Differenzbildes, und
(S6) Erzeugen von durch Binarisieren des Objektbildes, des Hintergrundbildes und des Differenzbildes jeweils mit einem Verwenden der eingestellten Schwellen erhaltenen Binärbildern;
(S7) auf der Basis der Binärbilder des Objektbildes, des Hintergrundbildes und des Differenzbildes Detektieren von Pixeln, die jeweils erfüllen, dass das Pixel nicht ein Wasserbereich im Binärbild des Objektbildes ist, das Pixel ein Wasserbereich im Binärbild des Hintergrundbildes ist und das Pixel nicht ein Wasserbereich im Binärbild des Differenzbildes ist, und
(S7) Extrahieren der detektierten Pixel als Pixel eines Kandidaten eines mobilen Körpers; und
(S8) Detektieren des mobilen Körper im Objektbild auf der Basis der extrahierten Pixel.

3. Programm zum Veranlassen, dass ein Computer das Verfahren nach Anspruch 2 durchführt.

## Revendications

1. Dispositif de traitement d'images comprenant :
un moyen de génération d'image (11) pour générer une image de différence représentant une différence entre une image d'objet et une image d'arrière-plan, l'image d'objet étant une image comportant une zone cible à partir de laquelle un corps mobile doit être détecté, l'image d'arrière-plan comportant la zone cible et étant une image capturée au moment où il n'y a pas de corps mobile dans la zone cible ; et
un moyen de détection pour détecter le corps mobile à partir de l'image d'objet sur la base de l'image d'objet, de l'image d'arrière-plan et de l'image de différence,
dans lequel l'image d'objet et l'image d'arrière-plan sont des images satellite chacune associée à des informations de position qui sont la latitude et la longitude sur la Terre, sur la base d'une orbite d'un satellite,
dans lequel le moyen de génération d'image (11) est configuré pour réaliser un positionnement de l'image d'objet et de l'image d'arrière-plan sur la base des informations de position et d'une similarité topologique entre l'image d'objet et l'image d'arrière-plan, calculer une différence entre une valeur de luminance de chaque pixel de l'image d'objet et une valeur de luminance d'un pixel correspondant de l'image d'arrière-plan, et générer l'image de différence en utilisant les différences calculées en tant que valeurs de pixels, et
dans lequel le moyen de détection comprend :
un moyen de génération d'images binaires (12) configuré pour
spécifier, sur la base d'informations de position comprises dans chacune de l'image d'objet, de l'image d'arrière-plan et de l'image de différence, et d'informations géographiques comportant des informations de position d'une terre, une zone d'exclusion qui est une zone de terre représentant la position de la terre sur chacune de l'image d'objet, de l'image d'arrière-plan et de l'image de différence,
définir une zone d'exclusion étendue qui est générée, en étendant la zone d'exclusion spécifiée conformément à un critère prédéterminé, à partir de la zone cible comprise dans chacune de l'image d'objet, de l'image d'arrière-plan et de l'image de différence,
déterminer une zone résiduelle dans laquelle la zone d'exclusion étendue est retirée de la zone cible comprise dans chacune de l'image d'objet, de l'image d'arrière-plan et de l'image de différence, comme étant une zone d'eau,
générer une distribution de valeurs de luminance de pixels dans la zone d'eau comprise dans chacune de l'image d'objet, de l'image d'arrière-plan et de l'image de différence,
définir un seuil de valeurs de luminance avec lequel des valeurs de luminance qui peuvent être considérées comme une zone d'eau et des valeurs de luminance qui peuvent être considérées comme un objet existant dans la zone d'eau peuvent être distinguées les unes des autres, dans la zone d'eau dans chacune de l'image d'objet, de l'image d'arrière-plan et de l'image de différence, et
générer des images binaires obtenues en binarisant l'image d'objet, l'image d'arrière-plan et l'image de différence respectivement à l'aide des seuils définis ;
une unité d'extraction de pixels candidats (13) configurée pour
détecter, sur la base des images binaires de l'image d'objet, de l'image d'arrière-plan et de l'image de différence, des pixels satisfaisant chacun le fait que le pixel n'est pas une zone d'eau dans l'image binaire de l'image d'objet, le pixel est une zone d'eau dans l'image binaire de l'image d'arrière-plan, et le pixel n'est pas une zone d'eau dans l'image binaire de l'image de différence, et
extraire les pixels détectés en tant que pixels d'un candidat corps mobile ; et
un moyen de détection de corps mobile (14) configuré pour détecter le corps mobile dans l'image d'objet sur la base des pixels extraits.

2. Procédé de traitement d'images mis en oeuvre par ordinateur comprenant :
(S2) la génération d'une image de différence représentant une différence entre une image d'objet et une image d'arrière-plan, l'image d'objet étant une image comportant une zone cible à partir de laquelle un corps mobile doit être détecté, l'image d'arrière-plan comportant la zone cible et étant une image capturée au moment où il n'y a pas de corps mobile dans la zone cible ; et
la détection du corps mobile à partir de l'image d'objet sur la base de l'image d'objet, de l'image d'arrière-plan et de l'image de différence,
dans lequel l'image d'objet et l'image d'arrière-plan sont des images satellite chacune associée à des informations de position qui sont la latitude et la longitude sur la Terre,
dans lequel la génération comprend :
la réalisation d'un positionnement de l'image d'objet et de l'image d'arrière-plan sur la base des informations de position ou d'une similarité topologique entre l'image d'objet et l'image d'arrière-plan,
le calcul d'une différence entre une valeur de luminance de chaque pixel de l'image d'objet et une valeur de luminance d'un pixel correspondant de l'image d'arrière-plan, et
la génération de l'image de différence en utilisant les différences calculées en tant que valeurs de pixels, et
dans lequel la détection comprend :
(53) la spécification, sur la base d'informations de position comprises dans chacune de l'image d'objet, de l'image d'arrière-plan et de l'image de différence, et d'informations géographiques comportant des informations de position d'une terre, d'une zone d'exclusion qui est une zone de terre représentant la position de la terre sur chacune de l'image d'objet, de l'image d'arrière-plan et de l'image de différence,
(S3) la définition d'une zone d'exclusion étendue qui est générée, en étendant la zone d'exclusion spécifiée conformément à un critère prédéterminé, à partir de la zone cible comprise dans chacune de l'image d'objet, de l'image d'arrière-plan et de l'image de différence,
(53) la détermination d'une zone résiduelle dans laquelle la zone d'exclusion étendue est retirée de la zone cible comprise dans chacune de l'image d'objet, l'image d'arrière-plan et l'image de différence, comme étant une zone d'eau,
(54) la génération d'une distribution de valeurs de luminance de pixels dans la zone d'eau comprise dans chacune de l'image d'objet, de l'image d'arrière-plan et de l'image de différence,
(55) la définition d'un seuil de valeurs de luminance avec lequel des valeurs de luminance qui peuvent être considérées comme une zone d'eau et des valeurs de luminance qui peuvent être considérées comme un objet existant dans la zone d'eau peuvent être distinguées les unes des autres, dans la zone d'eau dans chacune de l'image d'objet, de l'image d'arrière-plan et de l'image de différence,
(56) la génération d'images binaires obtenues en binarisant l'image d'objet, l'image d'arrière-plan et l'image de différence respectivement à l'aide des seuils définis,
(57) la détection, sur la base des images binaires de l'image d'objet, de l'image d'arrière-plan et de l'image de différence, de pixels satisfaisant chacun le fait que le pixel n'est pas une zone d'eau dans l'image binaire de l'image d'objet, le pixel est une zone d'eau dans l'image binaire de l'image d'arrière-plan, et le pixel n'est pas une zone d'eau dans l'image binaire de l'image de différence,
(S7) l'extraction des pixels détectés en tant que pixels d'un candidat corps mobile ; et
(S8) la détection du corps mobile dans l'image d'objet sur la base des pixels extraits.

3. Programme pour amener un ordinateur à réaliser le procédé selon la revendication 2.
